# EUROPEAN PATENT APPLICATION

(11) **EP 3 370 136 A1**
(43) Date of publication of application: **05.09.2018**
(21) Application number: 16858634.5
(22) Date of filing: 23.05.2016
(51) Int. Cl.: G06F 3/048

(54) **INPUT DATA PROCESSING METHOD, APPARATUS AND DEVICE, AND NON-VOLATILE COMPUTER STORAGE MEDIUM**

(30) Priority: 26.10.2015 CN 201510702341
(71) Applicant: Baidu Online Network Technology (Beijing) Co., Ltd, Beijing 100085 (CN)
(72) Inventor: BU, Qinghan, Beijing 100085 (CN)
(74) Representative: dompatent von Kreisler Selting Werner - Partnerschaft von Patent- und Rechtsanwälten mbB
(86) International application number: PCT/CN2016/083003
(87) International publication number: WO 2017/071190

(57) **Abstract**

The present disclosure provides a method and apparatus for processing input data, an apparatus and a non-volatile computer storage medium. In embodiments of the present disclosure, the user's at least one input data is obtained, and then semantic data is obtained according to said at least one input data so that pushed information is obtained according to the semantic data and said pushed information is provided to the user. Since the pushed information is obtained by considering the semantic data obtained according to the user's input data instead of directly considering the user's input data, the pushed information provided to the user can better conform to the user's intention, thereby improving the input data processing flexibility.

## Description

The present disclosure claims priority to the Chinese patent application No.201510702341.8 entitled "Method and Apparatus for Processing Input Data" filed on the filing date October 26, 2015, the entire disclosure of which is hereby incorporated by reference in its entirety.

### Field of the Disclosure

The present disclosure relates to input method technologies, and particularly to a method and apparatus for processing input data, an apparatus and a non-volatile computer storage medium.

### Background of the Disclosure

An input method refers to an encoding method for inputting various characters into a terminal. Different languages, countries and regions have different input methods such as Sogou pinyin input method, Baidu input method and QQ pinyin input method. Generally, a client of input method software may, according to the user-input character sequence, provide candidates matching the character sequence so that the user selects one candidate to put it on the screen. An arrangement order of the candidates provided by the client is related to times of candidates being put on screen.

However, technical solutions provided in the prior art can only provide candidates matching the character sequence and the arrangement order of the candidates is related to times of candidates being put on screen, thereby causing reduction of the flexibility in processing the input data.

### Summary of the Disclosure

A plurality of aspects of the present disclosure provide a method and apparatus for processing input data, an apparatus and a non-volatile computer storage medium to improve the input data processing flexibility.

According to an aspect of the present disclosure, there is provided a method for processing input data, comprising:
obtaining the user's at least one input data;
obtaining semantic data according to said at least one input data;
obtaining pushed information according to the semantic data;
providing said pushed information to the user.

The above aspect and any possible implementation mode further provide an implementation mode: the obtaining the user's at least one input data comprises:
obtaining the user's at least one input data continuous in time.

The above aspect and any possible implementation mode further provide an implementation mode: the obtaining semantic data according to said at least one input data comprises:
obtaining a bag-of-words of each input data according to each input data in said at least one input data; and
obtaining the semantic data according to the bag-of-words of said each input data.

The above aspect and any possible implementation mode further provide an implementation mode: the obtaining a bag-of-words of each input data according to each input data in said at least one input data comprises:
obtaining the bag-of-words of said each input data according to said each input data, or said each input data and a preset extension data.

The above aspect and any possible implementation mode further provide an implementation mode: the input data includes at least one of the following data:
the user's input sequence; and
the user's location data.

The above aspect and any possible implementation mode further provide an implementation mode: the user's location data includes at least one of the following data:
location data corresponding to the user's input sequence; and
other location data besides the location data corresponding to the user's input sequence.

According to another aspect of the present disclosure, there is provided an apparatus for processing input data, comprising:
an obtaining unit configured to obtain the user's at least one input data;
a parsing unit configured to obtain semantic data according to said at least one input data;
a matching unit configured to obtain pushed information according to the semantic data; and
a pushing unit configured to provide said pushed information to the user.

The above aspect and any possible implementation mode further provide an implementation mode: the obtaining unit is specifically configured to
obtain the user's at least one input data continuous in time.

The above aspect and any possible implementation mode further provide an implementation mode: the parsing unit is specifically configured to
obtain a bag-of-words of each input data according to each input data in said at least one input data; and
obtain the semantic data according to the bag-of-words of said each input data.

The above aspect and any possible implementation mode further provide an implementation mode: the parsing unit is specifically configured to
obtain the bag-of-words of said each input data according to said each input data, or said each input data and a preset extension data.

The above aspect and any possible implementation mode further provide an implementation mode: the input data includes at least one of the following data:
the user's input sequence; and
the user's location data.

The above aspect and any possible implementation mode further provide an implementation mode: the user's location data includes at least one of the following data:
location data corresponding to the user's input sequence; and
other location data besides the location data corresponding to the user's input sequence.

According to a further aspect of the present disclosure, there is provided an apparatus, comprising
one or more processors;
a memory;
one or more programs stored in the memory and configured to execute the following operations when executed by the one or more processors:
obtaining the user's at least one input data;
obtaining semantic data according to said at least one input data;
obtaining pushed information according to the semantic data;
providing said pushed information to the user.

According to a further aspect of the present disclosure, there is provided a non-volatile computer storage medium in which one or more programs are stored, an apparatus being enabled to execute the following operations when said one or more programs are executed by the apparatus:
obtaining the user's at least one input data;
obtaining sematic data according to said at least one input data;
obtaining pushed information according to the semantic data;
providing said pushed information to the user.

As known from the above technical solutions, in embodiments of the present disclosure, the user's at least one input data is obtained, and then semantic data is obtained according to said at least one input data so that pushed information is obtained according to the semantic data and said pushed information is provided to the user. Since the pushed information is obtained by considering the semantic data obtained according to the user's input data instead of directly considering the user's input data, the pushed information provided to the user can better conform to the user's intention, thereby improving the input data processing flexibility.

In addition, with the technical solution provided by the present disclosure being employed, since the pushed information is obtained by considering the semantic data obtained according to the user's input data instead of directly considering the user's input data, the pushed information provided to the user can better conform to the user's intention, and therefore the pushed information is enabled to more easily attract the user's extra concerns and effectively improve the input data-processing extensibility.

In addition, with the technical solution provided by the present disclosure being employed, since the pushed information is obtained by considering the semantic data obtained according to the user's input data instead of directly considering the user's input data, the pushed information provided to the user can better conform to the user's intention and be directly selected by the user, thereby effectively improving the input data-processing efficiency.

In addition, with the technical solution provided by the present disclosure being employed, since the pushed information is obtained by considering the semantic data obtained according to the user's input data instead of directly considering the user's input data, the pushed information provided to the user can better conform to the user's intention, and the user needn't input extra input data to obtain other pushed information, so that the input data-processing reliability can be improved effectively.

In addition, with the technical solution provided by the present disclosure being employed, whilst a basic information input function is provided, it is feasible to further provide other pushed information related to input behavior, for example, advertisements, games or application programs, to effectively improve the user's experience.

### Brief Description of Drawings

To describe technical solutions of embodiments of the present disclosure more clearly, figures to be used in the embodiments or in depictions regarding the prior art will be described briefly. Obviously, the figures described below are only some embodiments of the present disclosure. Those having ordinary skill in the art appreciate that other figures may be obtained from these figures without making inventive efforts.
Fig. 1 is a flow chart of a method for processing input data according to an embodiment of the present disclosure;
Fig. 2 is a block diagram of an apparatus for processing input data according to another embodiment of the present disclosure.

### Detailed Description of Preferred Embodiments

To make objectives, technical solutions and advantages of embodiments of the present disclosure clearer, technical solutions of embodiment of the present disclosure will be described clearly and completely with reference to figures in embodiments of the present disclosure. Obviously, embodiments described here are partial embodiments of the present disclosure, not all embodiments. All other embodiments obtained by those having ordinary skill in the art based on the embodiments of the present disclosure, without making any inventive efforts, fall within the protection scope of the present disclosure.

It needs to be appreciated that the terminals involved in the embodiments of the present disclosure comprise but are not limited to a mobile phone, a Personal Digital Assistant (PDA), a wireless handheld device, a tablet computer, a Personal Computer (PC), an MP3 player, an MP4 player, and a wearable device (e.g., a pair of smart glasses, a smart watch, or a smart bracelet).

In addition, the term "and/or" used in the text is only an association relationship depicting associated objects and represents that three relations might exist, for example, A and/or B may represents three cases, namely, A exists individually, both A and B coexist, and B exists individually. In addition, the symbol "/" in the text generally indicates associated objects before and after the symbol are in an "or" relationship.

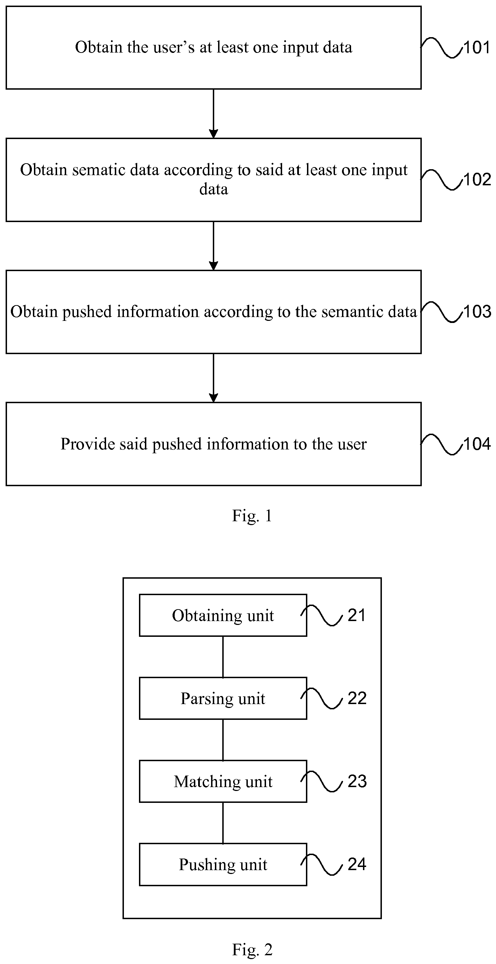

Fig. 1 is a flow chart of a method for processing input data according to an embodiment of the present disclosure.
101: obtaining the user's at least one input data.
102: obtaining semantic data according to said at least one input data.
103: obtaining pushed information according to the semantic data.
104: providing said pushed information to the user.

It needs to be appreciated that subjects for executing 101-104 may partially or totally be an applications located in a local terminal, for example, input method application, or a function unit such as a plug-in or Software Development Kit (SDK) arranged in an application located at the local terminal, or a processing engine located in a network-side server, or a distributed type system located on the network side. This is not particularly limited in the present embodiment.

The input method refers to an encoding method for inputting various characters into a terminal. Different languages, countries and regions have different input methods such as Sogou pinyin input method, Baidu input method and QQ pinyin input method. Generally, the input method application may, according to the user-input character sequence, displays to the user several candidates corresponding to the character sequence so that the user select one candidate to complete the input operation, for example, get-on-screen operation.

It may be understood that the application may be a native application (nativeAPP) installed on the terminal, or a web program (webApp) of a browser on the terminal. This is not particularly limited in the present embodiment.

As such, the user's at least one input data is obtained, and then semantic data is obtained according to said at least one input data so that pushed information is obtained according to the semantic data and said pushed information is provided to the user. Since the pushed information is obtained by considering the semantic data obtained according to the user's input data instead of directly considering the user's input data, the pushed information provided to the user can better conform to the user's intention and thereby improves the input data processing flexibility.

Optionally, in a possible implementation mode of the present embodiment, in 101, the obtained input data may include but is not limited to at least one of the following data:
the user's input sequence; and
the user's location data.

The so-called user's input sequence refers to a sequence published (namely, put on screen) by the user using input method application. It may be understood that the so-called input sequence may be an individual input sequence input once, or a combined data sequence consecutively input for multiple times, and this is not particularly limited in the present embodiment.

Specifically, it is feasible to, according to the user's input intention, perform corresponding processing for the user-input character sequence to obtain the input sequence.

In a specific implementation procedure, the user's character sequence may include but is not limited to text and is not specifically limited in the present embodiment. For example, the user may input the character sequence corresponding to different language in an input box provided by the application, and the text may be a pinyin sequence, a Roman sequence, a glyph sequence or the like. This is not particularly limited in the present embodiment.

In another specific implementation procedure, the input intention is to input characters of many types of languages such as Chinese language, then it is specifically feasible to perform encoding processing for the collected character sequence such as pinyin sequence, Roman sequence or glyph sequence to obtain corresponding several candidates, then, according to a selection instruction input by the user, select one candidate from said several candidates as all or a portion of the input sequence to execute the put-on-screen operation.

Noticeably, in 101, in the case that the execution subject is the input method application, it is necessary to provide the following particular explanations respectively for two cases: local input method application and cloud input method application.

The first case: when the input method application is a local input method application, in 101, it is specifically feasible to directly perform corresponding processing for the character sequence to obtain a processing result. For example, it is feasible to perform encoding processing for the character sequence to obtain corresponding several candidates, then, according to a selection instruction input by the user, select one candidate from said several candidates as all or a portion of the input sequence to execute the put-on-screen operation.

The second case: when the input method application is a cloud input method application, in 101, it is specifically feasible to send the character sequence to a cloud server which performs corresponding processing for the character sequence and returns a processing result. For example, the cloud server performs encoding processing for the character sequence to obtain corresponding several candidates, then, according to a selection instruction input by the user, select one candidate from said several candidates as all or a portion of the input sequence and returns the input sequence to execute the put-on-screen operation.

The present embodiment does not particularly limit the above two cases.

To so-called user's location data refers to data capable of identifying the user's location, for example, geographic location data such as longitude and latitude, or again for example, text location data such as POI name. This is not particularly limited in the present embodiment.

Wherein the user's location data may include but is not limited to at least one of the following data:
location data corresponding to the user's input sequence; and
other location data besides the location data corresponding to the user's input sequence, for example, location data at any time.

The location data corresponding to the user's input sequence is taken as an example to illustrate how to obtain the input data.

In a specific implementation procedure, when the user uses the input method application to publish (namely, put on screen) an input sequence, it is feasible to invoke an interface provided by the terminal to obtain the geographic location data at the location of the terminal, and then send the obtained geographical location data together with the input-published input sequence in a predefined format. After the input sequence and location data corresponding to the input sequence, namely, input data, are received, these input data are stored in a database.

Before the input data is stored in the database, it is feasible to further execute a filtration procedure to filter the input sequence. The filtration procedure may include but is not limited to at least one of conventional noise cleaning, part of speech classification and word sequence conversion.

Operation of the user's each input sequence is processed through the above procedure. Once the user's input sequence and location data corresponding to the input sequence, namely, input data, are received, judgment is made as to whether the user already accumulates sufficient input data in a unit time to satisfy preset constraint conditions, for example, achieve certain put-on-screen times, achieve a certain number of whole sentences or any combination thereof If the constraint conditions are satisfied, all input data stored by the user in the database may be invoked as the user's at least one input data obtained in 101.

Optionally, in a possible implementation mode of the present embodiment, in 101, it is specifically to obtain the user's at least one input data consecutive in time. During the implementation, these input data may be consecutive in time. For example, a sentence consecutively input by the user may serve as the user's these input data. This can ensure that the user-input input data is consecutive and consistent semantically.

Optionally, in a possible implementation mode of the present embodiment, in 102, it is specifically feasible to, obtain a bag-of-words of each input data according to each input data in said at least one input data, and then obtain the semantic data according to the bag-of-words of said each input data. The so-called semantic data refer to some data representing the user's behavior intention.

In information search, assume that a word order, grammar and syntax of a text namely an input sequence are neglected, it is only considered as a word set or a word combination. The so-called word set or word combination may be called a bag-of-words.

Each word in the text appears independently without depending on whether other words appear, or, put it another way, the author of the article selects a word at any location independently without being affected by preceding sentences.

It may be appreciated that the bag-of-words of each input data is independent. Hence, during obtainment of the semantic data, a weight corresponding to the bag-of-words of each input data is different.

Specifically, it is feasible to perform word-segmentation processing for the text corresponding to each input data, for example, the text corresponding to the input sequence, or again for example, the text corresponding to the location data, to obtain a word-segmentation result, and then, allow the word-segmentation result to form the bag-of-words of the input data.

After word-segmentation processing is performed for the text corresponding to the input data, filtration processing is performed for words obtained from the word-segmentation processing to improve subsequent processing efficiency and reduce noise. The filtration processing includes but is not limited to filtration processing listed below: filtering to remove words included in a preset stop word listing, wherein the stop word listing includes function words, auxiliary words, pronouns, articles, adverbs and modal particles pre-obtained by performing statistics based on word frequency, and these words usually do not have an independent meaning-conveying capability. Specifically, it is feasible to obtain these words by collecting words whose occurrence frequency reaches a preset high-frequency condition from already-existing resources, for example, the auxiliary word " 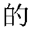 " has a very high occurrence frequency but it usually has a very low meaning-conveying capability, so it is collected into the stop word listing.

In a specific implementation procedure, the bag-of-words of said each input data may be obtained according to said each input data.

In another specific implementation procedure, it is specifically feasible to obtain the bag-of-words of said each input data according to said each input data and a preset extension data. The so-called extension data may be an input data-extension text extension pair, for example, a geographic location data-hot word extension pair.

In an implementation mode, it is specifically feasible to build a semantic parsing model for the user from multiple dimensions, and store the semantic parsing model built each time in a structure to obtain the semantic data according to the bag-of-words of said each input data. As such, it is possible to estimate the user's behaviors in larger temporal and spatial dimensions.

In the present embodiment, the user's at least one input data is obtained, and then semantic data is obtained according to said at least one input data so that pushed information is obtained according to the semantic data and said pushed information is provided to the user. Since the pushed information is obtained by considering the semantic data obtained according to the user's input data instead of directly considering the user's input data, the pushed information provided to the user can better conform to the user's intention, thereby improving the input data processing flexibility.

In addition, with the technical solution provided by the present disclosure being employed, since the pushed information is obtained by considering the semantic data obtained according to the user's input data instead of directly considering the user's input data, the pushed information provided to the user can better conform to the user's intention, and therefore the pushed information is enabled to more easily attract the user's extra concerns and effectively improve the input data-processing extensibility.

In addition, with the technical solution provided by the present disclosure being employed, since the pushed information is obtained by considering the semantic data obtained according to the user's input data instead of directly considering the user's input data, the pushed information provided to the user can better conform to the user's intention and be directly selected by the user, thereby effectively improving the input data-processing efficiency.

In addition, with the technical solution provided by the present disclosure being employed, since the pushed information is obtained by considering the semantic data obtained according to the user's input data instead of directly considering the user's input data, the pushed information provided to the user can better conform to the user's intention, and the user needn't input extra input data to obtain other pushed information, so that the input data-processing reliability can be improved effectively.

In addition, with the technical solution provided by the present disclosure being employed, whilst a basic information input function is provided, it is feasible to further provide other pushed information related to input behavior, for example, advertisements, games or application programs, to effectively improve the user's experience.

As appreciated, for ease of description, the aforesaid method embodiments are all described as a combination of a series of actions, but those skilled in the art should appreciated that the present disclosure is not limited to the described order of actions because some steps may be performed in other orders or simultaneously according to the present disclosure. Secondly, those skilled in the art should appreciate the embodiments described in the description all belong to preferred embodiments, and the involved actions and modules are not necessarily requisite for the present disclosure.

In the above embodiments, different emphasis is placed on respective embodiments, and reference may be made to related depictions in other embodiments for portions not detailed in a certain embodiment.

Fig. 2 is a block diagram of an apparatus for processing input data according to another embodiment of the present disclosure. The apparatus for processing the input data according to the present embodiment may comprise an obtaining unit 21, a parsing unit 22, a matching unit 23 and a pushing unit 24, wherein the obtaining unit 21 is configured to obtain the user's at least one input data; the parsing unit 22 is configured to obtain semantic data according to said at least one input data; the matching unit 23 is configured to obtain pushed information according to the semantic data; and the pushing unit 24 is configured to provide said pushed information to the user.

It needs to be appreciated that apparatus for processing the input data according to the present embodiment may partially or totally be an application located in a local terminal, for example, an input method application, or a function unit such as a plug-in or Software Development Kit (SDK) arranged in an application located at the local terminal, or a processing engine located in a network-side server, or a distributed type system located on the network side. This is not particularly limited in the present embodiment.

The input method refers to an encoding method for inputting various characters into a terminal. Different languages, countries and regions have different input methods such as Sogou pinyin input method, Baidu input method and QQ pinyin input method. Generally, the input method application may, according to the user-input character sequence, displays to the user several candidates corresponding to the input sequence so that the user select one candidate to complete the input operation, for example, get-on-screen operation.

It may be understood that the application may be a native application (nativeAPP) installed on the terminal, or a web program (webApp) of a browser on the terminal. This is not particularly limited in the present embodiment.

Optionally, in a possible implementation mode of the present embodiment, the obtaining unit 21 is specifically configured to obtain the user's at least one input data continuous in time.

Optionally, in a possible implementation mode of the present embodiment, the parsing unit 22 is specifically configured to obtain a bag-of-words of each input data according to each input data in said at least one input data; and obtain the semantic data according to the bag-of-words of said each input data.

Specifically, the parsing unit 22 is specifically configured to obtain the bag-of-words of said each input data according to said each input data, or said each input data and a preset extension data.

Optionally, in a possible implementation mode of the present embodiment, the input data obtained by the obtaining unit 21 may include but is not limited to at least one of the following data:
the user's input sequence; and
the user's location data.

Wherein, the user's location data may include but is not limited to at least one of the following data:
location data corresponding to the user's input sequence; and
other location data besides the location data corresponding to the user's input sequence.

It needs to be appreciated that the method in the embodiment corresponding to Fig. 1 may be implemented by the apparatus for processing the input data according to the present embodiment. Reference may be made to relevant resources in the embodiment corresponding to Fig. 1 for detailed description, which will not be detailed any longer here.

In the present embodiment, the obtaining unit obtains the user's at least one input data, and then the parsing unit obtains the semantic data according to said at least one input data so that the matching unit can obtain pushed information according to the semantic data and the pushing unit provides said pushed information to the user. Since the pushed information is obtained by considering the semantic data obtained according to the user's input data instead of directly considering the user's input data, the pushed information provided to the user can better conform to the user's intention, thereby improving the input data processing flexibility.

In addition, with the technical solution provided by the present disclosure being employed, since the pushed information is obtained by considering the semantic data obtained according to the user's input data instead of directly considering the user's input data, the pushed information provided to the user can better conform to the user's intention, and therefore the pushed information is enabled to more easily attract the user's extra concerns and effectively improve the input data-processing extensibility.

In addition, with the technical solution provided by the present disclosure being employed, since the pushed information is obtained by considering the semantic data obtained according to the user's input data instead of directly considering the user's input data, the pushed information provided to the user can better conform to the user's intention and be directly selected by the user, thereby effectively improving the input data-processing efficiency.

In addition, with the technical solution provided by the present disclosure being employed, since the pushed information is obtained by considering the semantic data obtained according to the user's input data instead of directly considering the user's input data, the pushed information provided to the user can better conform to the user's intention, and the user needn't input extra input data to obtain other pushed information, so that the input data-processing reliability can be improved effectively.

In addition, with the technical solution provided by the present disclosure being employed, whilst a basic information input function is provided, it is feasible to further provide other pushed information related to input behavior, for example, advertisements, games or application programs, to effectively improve the user's experience.

Those skilled in the art can clearly understand that for purpose of convenience and brevity of depictions, reference may be made to corresponding procedures in the aforesaid method embodiments for specific operation procedures of the system, apparatus and units described above, which will not be detailed any more.

In the embodiments provided by the present disclosure, it should be understood that the revealed system, apparatus and method can be implemented in other ways. For example, the above-described embodiments for the apparatus are only exemplary, e.g., the division of the units is merely logical one, and, in reality, they can be divided in other ways upon implementation. For example, a plurality of units or components may be combined or integrated into another system, or some features may be neglected or not executed. In addition, mutual coupling or direct coupling or communicative connection as displayed or discussed may be indirect coupling or communicative connection performed via some interfaces, means or units and may be electrical, mechanical or in other forms.

The units described as separate parts may be or may not be physically separated, the parts shown as units may be or may not be physical units, i.e., they can be located in one place, or distributed in a plurality of network units. One can select some or all the units to achieve the purpose of the embodiment according to the actual needs.

Further, in the embodiments of the present disclosure, functional units can be integrated in one processing unit, or they can be separate physical presences; or two or more units can be integrated in one unit. The integrated unit described above can be implemented in the form of hardware, or they can be implemented with hardware plus software functional units.

The aforementioned integrated unit in the form of software function units may be stored in a computer readable storage medium. The aforementioned software function units are stored in a storage medium, including several instructions to instruct a computer device (a personal computer, server, or network equipment, etc.) or processor to perform some steps of the method described in the various embodiments of the present disclosure. The aforementioned storage medium includes various media that may store program codes, such as U disk, removable hard disk, read-only memory (ROM), a random access memory (RAM), magnetic disk, or an optical disk.

Finally, it is appreciated that the above embodiments are only used to illustrate the technical solutions of the present disclosure, not to limit the present disclosure; although the present disclosure is described in detail with reference to the above embodiments, those having ordinary skill in the art should understand that they still can modify technical solutions recited in the aforesaid embodiments or equivalently replace partial technical features therein; these modifications or substitutions do not make essence of corresponding technical solutions depart from the spirit and scope of technical solutions of embodiments of the present disclosure.

## Claims

1. A method for processing input data, wherein the method comprises:
obtaining the user's at least one input data;
obtaining semantic data according to said at least one input data;
obtaining pushed information according to the semantic data;
providing said pushed information to the user.

2. The method according to claim 1, wherein the obtaining the user's at least one input data comprises:
obtaining the user's at least one input data continuous in time.

3. The method according to claim 1 or 2, wherein the obtaining semantic data according to said at least one input data comprises:
obtaining a bag-of-words of each input data according to each input data in said at least one input data; and
obtaining the semantic data according to the bag-of-words of said each input data.

4. The method according to claim 3, wherein the obtaining the bag-of-words of each input data according to each input data in said at least one input data comprises:
obtaining the bag-of-words of said each input data according to said each input data, or said each input data and a preset extension data.

5. The method according to any of claims 1-4, wherein the input data includes at least one of the following data:
the user's input sequence; and
the user's location data.

6. The method according to claim 5, wherein the user's location data includes at least one of the following data:
location data corresponding to the user's input sequence; and
other location data besides the location data corresponding to the user's input sequence.

7. An apparatus for processing input data, wherein the apparatus comprises:
an obtaining unit configured to obtain the user's at least one input data;
a parsing unit configured to obtain semantic data according to said at least one input data;
a matching unit configured to obtain pushed information according to the semantic data; and
a pushing unit configured to provide said pushed information to the user.

8. The apparatus according to claim 7, wherein the obtaining unit is specifically configured to
obtain the user's at least one input data continuous in time.

9. The apparatus according to claim 7 or 8, wherein the parsing unit is specifically configured to
obtain a bag-of-words of each input data according to each input data in said at least one input data; and
obtain the semantic data according to the bag-of-words of said each input data.

10. The apparatus according to claim 9, wherein the parsing unit is specifically configured to
obtain the bag-of-words of said each input data according to said each input data, or said each input data and a preset extension data.

11. The apparatus according to any of claims 7-10, wherein the input data includes at least one of the following data:
the user's input sequence; and
the user's location data.

12. The apparatus according to claim 11, wherein the user's location data includes at least one of the following data:
location data corresponding to the user's input sequence; and
other location data besides the location data corresponding to the user's input sequence.

13. An apparatus, comprising
one or more processors;
a memory;
one or more programs stored in the memory and configured to execute the following operations when executed by the one or more processors:
obtaining the user's at least one input data;
obtaining semantic data according to said at least one input data;
obtaining pushed information according to the semantic data;
providing said pushed information to the user.

14. A non-volatile computer storage medium in which one or more programs are stored, an apparatus being enabled to execute the following operation when said one or more programs are executed by the apparatus:
obtaining the user's at least one input data;
obtaining sematic data according to said at least one input data;
obtaining pushed information according to the semantic data;
providing said pushed information to the user.
